# EUROPEAN PATENT SPECIFICATION

(11) **EP 4 262 174 B1**
(45) Date of publication and mention of the grant of the patent: **05.11.2025**
(21) Application number: 21905554.8
(22) Date of filing: 03.12.2021
(51) Int. Cl.: H04L 65/1104, H04L 61/45, H04L 43/00, H04L 45/74, H04L 45/00, H04L 61/3015, H04L 65/1016, H04L 65/1069, H04L 101/35

(54) **SIP NETWORK ELEMENT MULTI-ADDRESS LEARNING METHOD AND APPARATUS, AND SIGNALING MONITORING SYSTEM**
VERFAHREN UND VORRICHTUNG ZUM LERNEN MEHRERER ADRESSEN EINES SIP-NETZWERKELEMENTS UND SIGNALISIERUNGSÜBERWACHUNGSSYSTEM
PROCÉDÉ ET APPAREIL D'APPRENTISSAGE MULTI-ADRESSES D'ÉLÉMENT RÉSEAU SIP, ET SYSTÈME DE SURVEILLANCE DE SIGNALISATION

(30) Priority: 14.12.2020 CN 202011470632
(43) Date of publication of application: 18.10.2023
(73) Proprietor: ZTE Corporation, Shenzhen, Guangdong 518057 (CN)
(72) Inventor: YAN, Xiao, Shenzhen, Guangdong 518057 (CN); KAN, Changjiang, Shenzhen, Guangdong 518057 (CN); CHEN, Lei, Shenzhen, Guangdong 518057 (CN); NI, Chunhua, Shenzhen, Guangdong 518057 (CN)
(74) Representative: Osterhoff, Utz
(86) International application number: PCT/CN2021/135442
(87) International publication number: WO 2022/127625

(56) References cited:
- CN-A- 103 037 433
- CN-A- 107 317 786
- CN-A- 107 317 786
- CN-A- 110 913 010
- GB-A- 2 577 993
- US-A1- 2006 221 893
- US-A1- 2008 310 425

## Description

### Field of the Invention

Embodiments of the present disclosure relate but not limited to the technical field of communication networks, and in particular, relate but not limited to a SIP network element multi-address learning method and apparatus, and a signaling monitoring system.

### Background of the Invention

In recent years, with the rapid development of mobile Internet services, service traffic of IP multimedia subsystem (IMS) and Voice over LTE (VOLTE) continuously increases. Focuses of attention by an operator are mainly about how to monitor key indexes of the running of a data service in real time, give an early warning to exclude a potential network risk, quickly demarcate and locate a sudden failure, and improve the user experience and perception, and thus give rise to the research and development of various types of signaling monitoring systems.

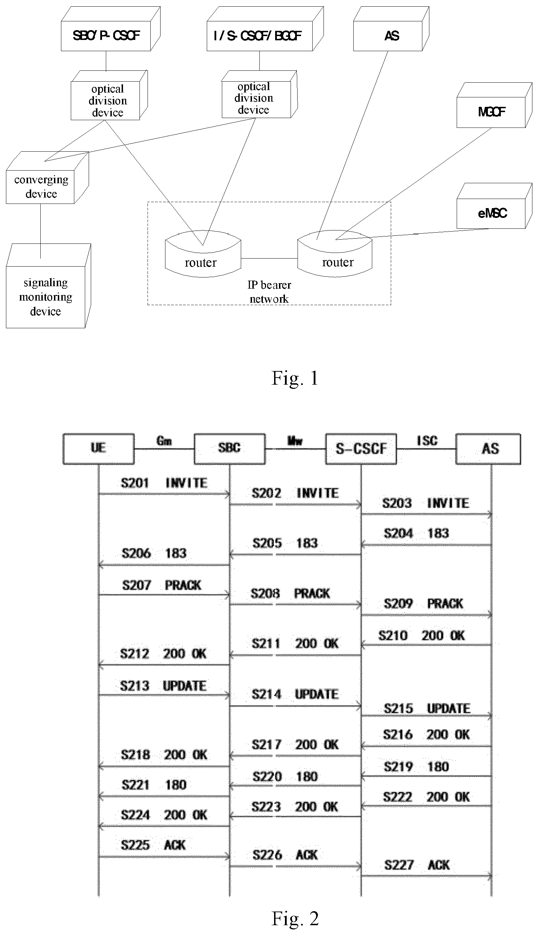

Session initiation protocol (SIP) is a multimedia communication protocol that is formulated by the Internet engineering task force (IETF), which is widely used in circuit switched (CS) networks, next generation networks (NGN), IMS networks and VOLTE networks, and supports multimedia services such as voice, video and data, and featured services such as Presence and Instant Message, etc. In the VOLTE networks alone, main signaling interfaces that use the SIP protocol include Gm, Mw, ISC, Mj, Mg, Ma, Mw/I2. Fig. 1 shows a network communication system, in which a deployment position of a signaling monitoring system in a IMS network or a VOLTE network is presented. It can be seen that the signaling monitoring system is not a direct participant in communication of the network, but merely copies signaling data of the network in real time via an optical splitting device and then analyzes and assesses a network running condition. A SIP communication network element entity neither performs signaling forwarding via the signaling monitoring system, nor senses the presence of the signaling monitoring system. This is an importance character distinguishing the signaling monitoring system from the SIP communication network element entity. Another difference therebetween lies in that, after being subjected to system configuration, the SIP communication network element entity clearly knows a network element type role that is played by itself, for example, a proxy CSCF (P-CSCF), a serving CSCF (S-CSCF), an interrogating CSCF (I-CSCF) and the like, and it also knows which IP addresses and communication ports are owned by itself. The SIP network element entity can flexibly select, according to requirements, among these addresses and ports for signaling transceiving. However, the signaling monitoring system does not master these information. Rather, the flexibility of the SIP entity may result in limitation to the SIP signaling monitoring system to a large extent sometimes. When the SIP network element uses different IP addresses in different flows of a session, there is a problem that the SIP signaling monitoring system cannot identify to which one of segments a subsequent SIP message belongs. For this technical problem, no effective solution has been proposed yet.

Relevant prior art has been identified in GB2577993 A and in CN107317786 A.

### Summary of the Invention

The main technical problem to be solved by a SIP network element multi-address learning method and apparatus and a signaling monitoring system provided by the embodiments of the present disclosure is that, when a SIP network element uses different IP addresses in different flows of one and the same session, a SIP signaling monitoring system cannot identify to which one of segments a subsequent SIP message belongs.

In order to solve the technical problem, the embodiments of the disclosure provide a SIP network element multi-address learning method, including: allocating a network element identifier to a SIP network element logical entity in a communication network, the SIP network element logical entity including at least one IP address; performing learning on IP address of the SIP network element logical entity by using a Branch parameter of a first Via header of a SIP message, or performing learning on IP address of the SIP network element logical entity by using a relationship between a HOST string in Top Route of a SIP request message and a destination IP address; creating an IP address-network element identifier information table and a network element identifier-IP address information table according to the IP address(es) related to the network element logical entity; and identifying, according to the IP address-network element identifier information table or the network element identifier-IP address information table, a network element logical entity to which a SIP message belongs.

An embodiment of the disclosure further provide a SIP network element multi-address learning apparatus, including: a configuration unit, an IP address learning unit, a creation unit and a message identification unit. The configuration unit is configured to allocate a network element identifier to a SIP network element logical entity in a communication network, the SIP network element logical entity including at least one IP address. The IP address learning unit is configured to perform learning on IP address of the SIP network element logical entity by using a Branch parameter of a first Via header of a SIP message, or perform learning on IP address of the SIP network element logical entity by using a relationship between a HOST string in Top Route of a SIP request message and a destination IP address. The creation unit is configured to create an IP address-network element identifier information table and a network element identifier-IP address information table according to the IP address(es) related to the network element logical entity. The message identification unit is configured to identify a SIP message according to the IP address-network element identifier information table or the network element identifier-IP address information table.

An embodiment of the disclosure further provide a SIP signaling monitoring system, including the SIP network element multi-address learning apparatus, and also including a processor, a memory and a communication bus. The communication bus is configured to enable connection communication between the processor and the memory. The processor is configured to execute one or more computer programs that is/are stored in the memory so as to implement the steps of the SIP network element multi-address learning method as above.

An embodiment of the disclosure further provide a computer storage medium. The computer-readable storage medium stores one or more programs, and the one or more programs can be executed by one or more processors so as to implement the steps of the SIP network element multi-address learning method as above.

The other features of the disclosure and corresponding beneficial effects will be described and illustrated in the following part of the description, and it should be understood that at least some of the beneficial effects become obvious from the content specified in the description of the disclosure.

### Brief Description of the Drawings

Fig. 1 is a schematic diagram of arrangement of a signaling monitoring system provided by the present disclosure in a IMS network or a VOLTE network;
Fig. 2 is a schematic diagram of signaling flows during a SIP calling establishment process in a related art provided by the disclosure;
Fig. 3 is a schematic diagram of change of IP addresses in a SIP calling establishment process in the related art provided by the disclosure;
Fig. 4 is a basic flowchart of a SIP network element multi-address learning method provided by Embodiment 1 of the disclosure;
Fig. 5A is a schematic diagram of establishment of an IP address-network element identifier information table provided by Embodiment 1 of the disclosure;
Fig. 5B is a schematic diagram of establishment of a network element identifier-IP address information table provided by Embodiment 1 of the disclosure;
Fig. 6 is a flowchart of a SIP network element multi-address learning method provided by Embodiment 1 of the disclosure;
Figs. 7A, 7B and 7C are schematic diagrams of establishment of the relationship between a network element and IP addresses provided by Embodiment 1 of the disclosure;
Fig. 8 is a schematic diagram of establishment of a Host-IP address information table provided by Embodiment 1 of the disclosure;
Fig. 9 is a flowchart of another SIP network element multi-address learning method provided by Embodiment 1 of the disclosure; and
Fig. 10 is a schematic diagram of a structure of a SIP network element multi-address learning apparatus provided by Embodiment 2 of the disclosure.

### Detailed Description of the Embodiments

In order to make the objectives, technical solutions and advantages of the present disclosure clearer, the embodiments of the disclosure are further illustrated in details below by using the specific implementations in conjunction with the accompanying drawings. It should be understood that the specific embodiments described herein are merely illustrative of the disclosure and are not intended to limit the disclosure.

In the related art, a SIP network element in a communication network usually has a plurality of IP addresses. The SIP network element entity can flexibly select, according to requirements, among these addresses and ports for signaling transceiving. However, a signaling monitoring system does not master these information. Rather, the flexibility of the SIP entity may result in limitation to the SIP signaling monitoring system to a large extent sometimes. When the SIP network element uses different IP addresses in different flows of a session, the SIP signaling monitoring system cannot identify to which one of segments a subsequent SIP message belongs.

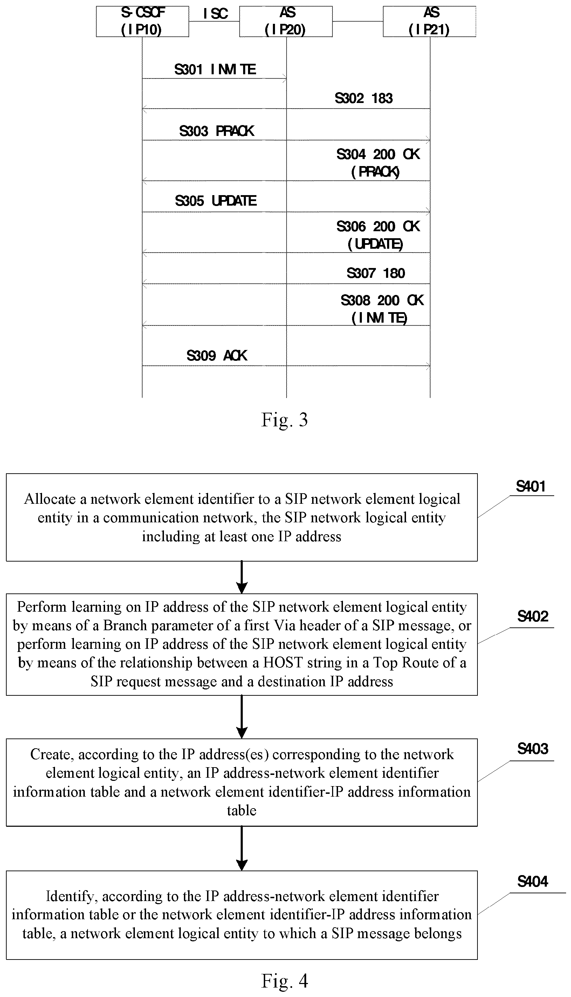

How this multi-address characteristic of the SIP network element entity limits the SIP signaling monitoring system will be specifically analyzed below through a calling establishment process shown in Figs. 2 and 3. For one complete SIP calling establishment process, a plurality of different SIP interfaces need to be passed through from a calling user to a called user, but the routing and forwarding principles as well as the problems of the plurality of different SIP interfaces are all similar. For the convenience of description, only signaling flows from a user equipment (UE) to an application server (AS) are taken as an example for illustration in Fig. 2 and the following.

Firstly, from S201 to S203, a UE sends an INVITE request to a session border controller (SBC) through a Gm interface, the SBC forwards signaling to a S-CSCF through an Mw interface, and the S-CSCF routes, according to a subscription service configuration, INVITE signaling to a AS through an ISC interface for triggering a service. From S204 to S206, the AS returns a 183 response to the calling UE. From S207 to S218, communication parties at both ends complete media negotiation. From S219 to S221, a 180 ringing message of a called party is transferred to the calling UE. From S222 to S224, a call answering 200 OK message is transferred to the calling UE. From S225 to S227, an acknowledgement (ACK) message of the calling UE is transferred.

For the SIP signaling monitoring system, it is usually necessary to monitor signaling flows of various interfaces, i.e., the Gm interface, the Mw interface and the ISC interface etc. in the whole course, record information such as a time of arrival and a processing state of a message whenever the message reaches an interface in an entire signaling flow, and then generate a related event report call list. Thus, the SIP signaling monitoring system needs to create and maintain an independent state data region for each of segments in the signaling flow. Although different SIP session flows can be distinguished by their CALL-ID, SIP signaling of one and the same session, during transfer among respective segments, can have enough discriminability only in a network layer (IP Layer) and a transmission layer (UDP or TCP), but in a SIP layer, it is difficult to identify to which one of the segments the SIP signaling belongs (except for an initial request message). For example, a PRACK request from S207 to S209 and a PRACK 200 OK response from S210 to S212 in Fig. 2 are highly similar, and the similar problem also occurs in subsequent flows of UPDATE, 180, INVITE 200 OK and ACK.

In order to distinguish signaling of segments in one and the same flow, the SIP signaling monitoring system tends to use a source address plus a destination address of a SIP message as a basis for identification. In a communication network deployed in reality, one SIP network element logical entity (for example, the S-CSCF, the AS etc.) is allowed to be configured with a plurality of sets of an IP address plus a port for transceiving of SIP messages. For the reasoning of load balance, link reliability, etc., the SIP network element logical entity can flexibly select a certain set of an IP address plus a port for communication. However, this address change mechanism will introduce a problem to the SIP signaling monitoring system: when a network element address of an initial SIP request is different from a network element address of a subsequent SIP message, how to identify to which of the segments a subsequent SIP message belongs?

A scenario of calling via the ISC interface, as shown in Fig. 3, is taken as an example. An address of a S-CSCF network element is IP10, and an AS network element has two addresses, i.e. IP20 and IP21. An initial calling request INVITE at S301 is sent from the address IP10 to the address IP20 of the AS network element. However, a 183 response message at S302 is sent from the address IP21 of the AS to IP10, and the AS also uses the address IP21 in the subsequent flows of PRACK, UPDATE, 180, 200OK (INVITE) and ACK. For the SIP signaling monitoring system that uses an IP address as a basis for identifying a segment, the segment identification mechanism fails, that is, when the SIP network element uses different IP addresses in different flows of the same session, the SIP signaling monitoring system cannot identify to which one of the segments a subsequent SIP message belongs.

In addition, in some service scenarios, it is expected to send an event report in a manner of associating two different SIP transaction flows (for example, two registration flows before and after "401" authentication flow of SIP registration) that are processed by the same SIP network element. In the case that this network element has multiple addresses, the existing SIP signaling monitoring system cannot perform the associating processing.

For the technical problem in the related art, the present disclosure provides an SIP network element multi-address learning method and apparatus as well as a SIP signaling monitoring system, which can automatically and quickly identify which IP addresses in a communication network collectively belong to one and the same SIP network element logical entity, and allocate a network element identifier to the SIP network element logical entity. The problem of incapable of identifying a segment when an address of a network element changes is solved by using the network element identifier, such that the workload of manual configuration and the complexity of personnel coordination can be reduced, and the flexibility of the SIP signaling monitoring system for adapting to an external networking change can be improved.

### Embodiment 1

In order to solve the problem that a SIP signaling monitoring system is incapable of identifying to which one of segments a subsequent SIP message belongs when a SIP network element uses different IP addresses in different flows of one and the same session, an embodiment of the disclosure provides a SIP network element multi-address learning method. As shown in Fig. 4, the method includes the following steps S401 to S404.
S401, a SIP network element logical entity in a communication network is allocated with a network element identifier, the SIP network element logical entity including at least one IP address;
S402, learning on IP address of the SIP network element logical entity is enabled by using a Branch parameter of a first Via header of a SIP message, or learning on IP address of the SIP network element logical entity is enabled by using a relationship between a HOST string in Top Route of a SIP request message and a destination IP address;
S403, according to the IP address(es) corresponding to the network element logical entity, an IP address-network element identifier information table and a network element identifier-IP address information table are created; and
S404, according to the IP address-network element identifier information table or the network element identifier-IP address information table, a network element logical entity to which the SIP message belongs is identified.

In the SIP network element multi-address learning method provided in the embodiment of the disclosure, learning on IP address of a SIP network element logical entity is enabled by using the Branch parameter of the first Via header of the SIP messages, or learning on IP address of the SIP network element logical entity is enabled by using the relationship between the HOST string in the Top Route of the SIP request message and the destination IP address, such that it is possible to automatically and quickly identify which IP addresses in a communication network belong to one and the same SIP network element entity, allocate a unique network element identifier to the SIP network element entity, and establish an IP address-network element identifier information table and a network element identifier-IP address information table according to the IP address(es) related to the SIP network element entity. Therefore, a network element logical entity to which a SIP message belongs can be identified according to the IP address-network element identifier information table or the network element identifier-IP address information table. In this way, even though the SIP network element uses different IP addresses in different flows of the same session, the SIP signaling monitoring system can still quickly identify to which one of segments a subsequent SIP message belongs. According to the IP address-network element identifier information table or the network element identifier-IP address information table that are established in the embodiment of the disclosure, when identification of a SIP message is performed, the signaling monitoring system can identify to which one of the segments the SIP message belongs according to IP addresses of a source network element and a destination network element, and can also identify according to a network element identifier related to the IP addresses of the source network element and the destination network element.

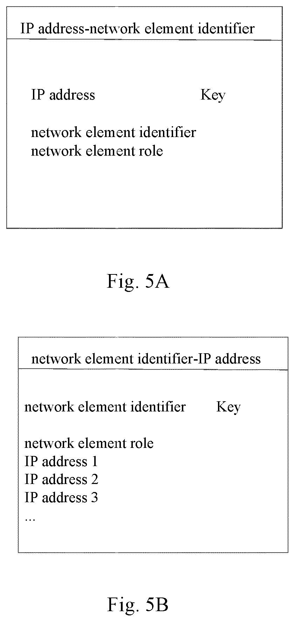

In this embodiment, referring to Figs. 5A and 5B, the IP address-network element identifier information table is an information table that takes an IP address as a Key value and includes in a Value part at least a network element identifier field and a network element role field. The network element identifier-IP address information table is an information table that takes a network element identifier as a Key value and includes in a Value part at least a network element role field and at least one IP address field.

In the communication network, a SIP network element logical entity usually has a plurality of different IP addresses. A seemingly simple and direct method for performing learning on IP address of the SIP network element logical entity involves: directly applying for acquisition of IP address information of SIP network elements from a network operator. However, SIP network element entities are deployed across a wide area with a large number, so the workload of sorting out the multi-address relationships of all the network elements is relatively large. In addition, change information on structure extension of a communication network in one province cannot be notified to operation and maintenance personnel in other provinces in a timely manner. Therefore, the method of directly acquiring network element multi-address information from a network operator has the problems of high communicate and maintenance costs and information lag.

For these problems, the disclosure provides a SIP network element multi-address learning method, including: performing learning on IP address of a SIP network element logical entity by using a Branch parameter of a first Via header of a SIP message, or performing learning on IP address of the SIP network element logical entity by using a relationship between a HOST string in Top Route of a SIP request message and a destination IP address. The two mechanisms complement each other, thereby improving a success rate of learning.

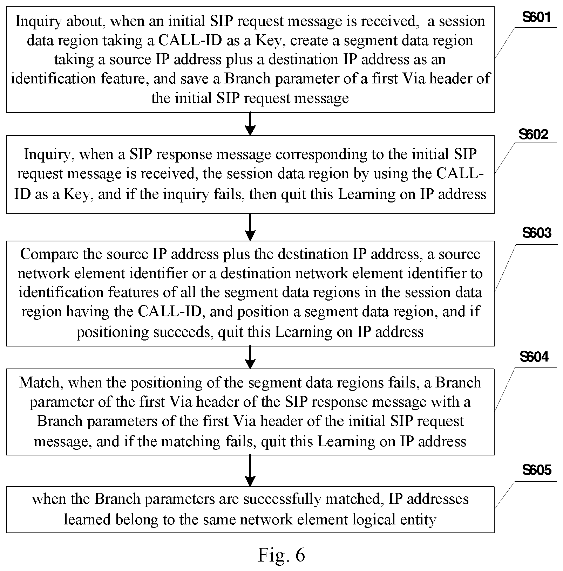

For a SIP request message and a SIP response message that have the same CALL-ID header and the same Method of CSeq header, when the SIP request message and the SIP response message fail to be associated with each other by using IP address, learning on IP address of the SIP network element logical entity is enabled by using the Branch parameter of the first Via header of a SIP message. A learning result of this method has high accuracy, and can be directly used after the learning succeeds. However, the learning can succeed only when change of the IP address occurs during a SIP transaction flow. As shown in Fig. 6, the method includes the following steps S601 to S605.

At S601, when an initial SIP request message is received, an inquiry for a session data region taking a CALL-ID as a Key is performed, a segment data region taking a source IP address plus a destination IP address as an identification feature is created, and a Branch parameter of a first Via header of the initial SIP request message is saved.

At the step S601, if it is failed to inquire about any session data region taking the CALL-ID as the Key, then a session data region taking the CALL-ID as a Key is created. In the embodiment, the CALL-ID and the feature of a source address plus a destination address are classified into two levels of data regions to be managed. A design of this manner has the advantages of improving the performance and saving a memory. Certainly, in the embodiment, subsequent learning on IP address can also be enabled by directly using a single-level data region manner of CALL-ID plus a source address plus a destination address. The principle of learning keeps unchanged, and it therefore is not defined any further in the embodiment.

At S602, when a SIP response message corresponding to the initial SIP request message is received, the session data region is inquired by using the CALL-ID as a Key, and if the inquiry fails, then quit this learning on IP address.

Since the SIP response message is forwarded in opposite direction relative to the SIP request message, adjustment must be performed first to keep its correlation between the source address/destination address and the SIP network element entity logically consistent with that of the SIP request message, so that subsequent operations such as inquiry and comparison can thus be performed. Any of a source address, a destination address, a source network element identifier and a destination network element identifier mentioned in the following of the embodiment refers to the one subjected to adjustment for keeping logical consistency with the SIP request message.

At S603, either the source IP address plus the destination IP address or a source network element identifier or a destination network element identifier is compared to identification features of all segment data regions in the session data region having the CALL-ID, and a segment data region is positioned then; and if the positioning succeeds, then quit this learning on IP address.

At S604, when the positioning of the segment data region fails, a Branch parameter of the first Via header of the SIP response message is matched with a Branch parameter of the first Via header of the initial SIP request message; and if the matching fails, then quit this learning on IP address.

At S605, when the Branch parameters are successfully matched, IP addresses that are learned belong to the same network element logical entity.

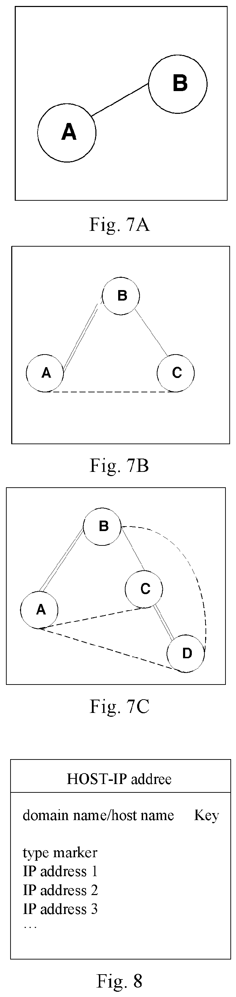

After the IP addresses are learned, addition or modification is performed on a relationship table between an IP address and a network element identifier. As shown in Figs. 7A-7C, Fig. 7A shows that IP address information of an IP address A and an IP address B are newly learned, A and B belonging to one and the same network element, IP address-network element identifier tables for A and B and a network element identifier-IP address information table are established then, and the same network element identifier is allocated to A and B. As shown in Fig. 7B, when it is known that A and B belong to the same network element and it is newly learned that B and C also belong to the same network element, a relationship between A and C can be also indirectly learned, and thereby a network element relationship between A, B and C is established. As shown in Fig. 7C, it is known that A and B belong to the same network element and a network element identifier 1 has been allocated thereto, and it is also known that C and D belong to the same network element and a network element identifier 2 has been allocated thereto, but now it is newly learning that B and C also belong to the same network element. In this case, since the network element identifier 1 and the network element identifier 2 are different, in order to establish same-network-element correlations among A, B, C and D, it is necessary to integrate the two different network element identifiers either by selecting one of these network element identifiers or re-allocating a new network element identifier 3. Meanwhile, relationships between B and C, between A and C and between A and D are also indirectly learned. In the figures, a double solid line represents a known relationship, a single solid line represents a directly learned relationship, and a dashed line represents an indirectly learned relationship.

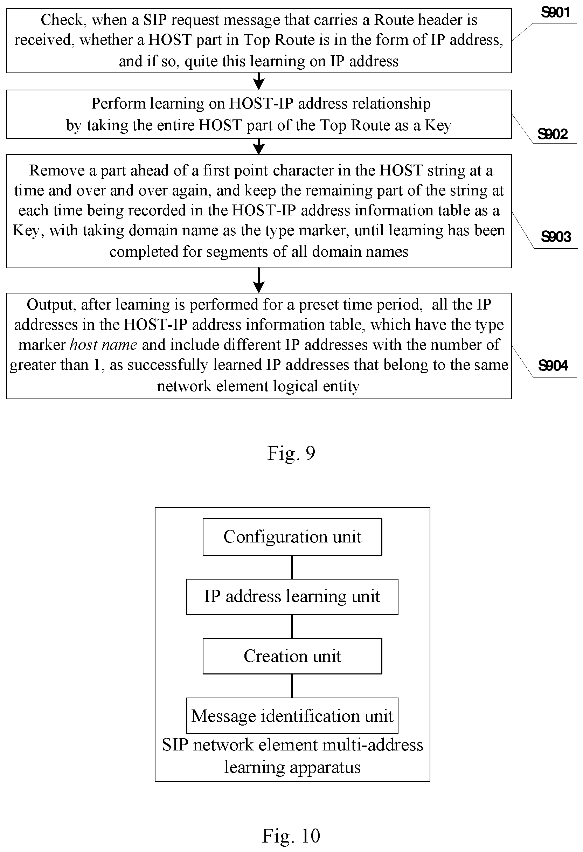

In the embodiment, learning on IP address of the SIP network element logical entity is also impossible to be enabled by using a relationship between a HOST string in Top Route of a SIP request message and a destination IP address. The method is not limited to performing learning during a SIP transaction. However, learning results of some exceptional scenarios need to be excluded, and an exclusion rule needs to be set. As shown in Fig. 8, a HOST-IP address information table needs to be created to implement the method. The HOST-IP address information table is an information table that takes a HOST as a Key value and includes in a Value part at least a type marker field and at least one ID address field. The HOST is a domain name or a host name. When a preset condition is met, learning on IP address of the SIP network element logical entity is performed by using the relationship between the HOST string in the Top Route of the SIP request message and the destination IP address. Since this learning mechanism may prolong a CPU processing duration and thus is not suitable for keeping on all the time, a trigger condition is configured such that SIP network element multi-address learning can be performed by the method only when the preset condition is met. The preset condition includes: a predetermined time period, a compulsory learning stage in an initial stage of mounting or starting of a device, and triggering via an instruction by a user. Referring to Fig. 9, the method includes the following steps S901 to S904.

At S901, when a SIP request message that carries a Route header is received, it is checked whether a HOST part in the Top Route is in the form of IP address; and if so, quit this IP address learning, and if the HOST part in the Top Route is not in the form of IP address, proceed to step S902.

At S902, learning on HOST-IP address relationship is performed by taking the entire HOST part of the Top Route as a Key and temporarily taking *host name* as a type marker.

The entire HOST part of the Top Route is converted into uppercase or lowercase characters and then is taken as the Key for inquiring about a HOST-IP address information table. When the inquiry fails, a new HOST-IP address information table is created. At this time, it is usually not determined yet whether the HOST part is a host name or a domain name, and the type marker is set as *"host name"* by default. If the HOST is the domain name, then the type marker is modified to *"domain name"* after the subsequent self-learning on domain name succeeds. If the inquiry about the HOST-IP address information table succeeds, then it is detected whether learning on destination address of the current SIP message has been succeeded, in the case that the learning on destination address has not been performed yet, a HOST-IP address information table is created according to the current IP destination address.

At S903, a part ahead of a first point character in the HOST string is removed at a time and over and over again, and the remaining part of the string at each time keeps being recorded in the HOST-IP address information table as a Key, with taking *domain name* as the type marker, until the learning has been completed for the segments of all domain names.

Taking a host name scscf10.cs.hn.node.ims. mnc000.mcc460.3gppnetwork.org as an example, it is required to add strings, i.e., cs.hn.node.ims.mnc000.mcc460.3gppnetwork.org, hn.node.ims.mnc000.mcc460.3gppnetwork.org, node.ims.mnc000.mcc460.3gppnetwork.org, ......, and org as *domain name* into the HOST-IP address information table over and over again.

When it is learned that the HOST that was marked as *host name,* in fact, has an actual type marker *domain name,* the type marker of the HOST is modified to *domain name* then.

At S904, after learning is performed for a preset time period, all the IP addresses in the HOST-IP address information table, which have the type marker *host name* and include different IP addresses with the number of greater than 1, are outputted as successfully learned IP addresses that belong to the same network element logical entity.

In the embodiment, it is necessary to perform exclusion on the successfully learned IP addresses according to a preset special exclusion rule. The special exclusion rule includes: excluding an IP address containing a string *mgcf* in its host name part, and excluding an IP address containing a resource pool feature string *pool* in its host name part.

Using the SIP network element multi-address learning method provided in the embodiment of the disclosure, learning on IP address of the SIP network element logical entity is enabled by using the Branch parameter of the first Via header of the SIP message, or learning on IP address of the SIP network element logical entity is enabled by using the relationship between the HOST string in the Top Route of the SIP request message and the destination IP address, such that it is possible to automatically and quickly identify which IP addresses in a communication network collectively belong to a SIP network element entity, allocate a unique network element identifier to the SIP network element entity, and establish an IP address-network element identifier information table and a network element identifier-IP address information table according to the IP addresses related to the SIP network element entity. Therefore, a SIP message can be identified according to the IP address-network element identifier information table or the network element identifier-IP address information table. In this way, even though the SIP network element uses different IP addresses in different flows of one and the same session, the SIP signaling monitoring system can still quickly identify to which one of the segments a subsequent SIP message belongs. Moreover, the problems of high communicate and maintenance costs and information lag resulted from acquiring network element multi-address information directly from a network operator are solved, the workload of manual configuration and the complexity of personnel coordination are reduced, and the flexibility of the SIP signaling monitoring system for adapting to an external networking change is improved.

### Embodiment 2

In order to solve the problem that a SIP signaling monitoring system is incapable of identifying to which one of segments a subsequent SIP message belongs when a SIP network element uses different IP addresses in different flows of one and the same session, an embodiment of the disclosure provides a SIP network element multi-address learning apparatus. As shown in Fig. 10, the apparatus includes: a configuration unit, an IP address learning unit, a creation unit and a message identification unit.

The configuration unit is configured to allocate a network element identifier to a SIP network element logical entity in a communication network, the SIP network element logical entity including at least one IP address.

The IP address learning unit is configured to perform learning on IP address of the SIP network element logical entity by using a Branch parameter of a first Via header of a SIP message, or perform learning on IP address of the SIP network element logical entity by using a relationship between a HOST string in Top Route of a SIP request message and a destination IP address.

The creation unit is configured to create an IP address-network element identifier information table and a network element identifier-IP address information table according to the IP address(es) related to the network element logical entity.

The message identification unit is configured to identify the SIP message according to the IP address-network element identifier information table or the network element identifier-IP address information table.

In the embodiment, the IP address learning unit includes a determination unit and a processing unit.

The determination unit is configured to determine, when a SIP request message and a SIP response message fail to associate with each other by using IP addresses, whether CALL-ID headers of the SIP request message and the SIP response message are the same and whether Method of CSeq headers of these two are the same.

The processing unit is configured to perform learning on IP address of the SIP network element logical entity by using the Branch parameter of the first Via header of the SIP message.

The determination unit is further configured to determine whether a preset condition is met, if the preset condition is met, the processing unit performs learning on IP address of the SIP network element logical entity by using the relationship between the HOST string in the Top Route of the SIP request message and the destination IP address.

The present embodiment of the disclosure further provides a SIP signaling monitoring system, including the SIP network element multi-address learning apparatus as well as a processor, a memory and a communication bus.

The communication bus is configured to enable connection communication between the processor and the memory.

The processor is configured to execute one or more computer programs stored in the memory so as to implement the steps of the SIP network element multi-address learning method according to Embodiment 1.

The present embodiment further provides a computer-readable storage medium, the computer-readable storage medium including volatile or non-volatile, removable and non-removable media implemented in any method or technology for storage of information such as computer-readable instructions, data structures, computer program modules or other data. The computer-readable storage medium includes, but not limited to a random access memory (RAM), a read-only memory (ROM), an electrically erasable programmable read only memory (EEPROM), a flash memory or other storage techniques, a compact disc read-only memory (CD-ROM), a digital versatile disc (DVD) or other optical disc memory, a cassette tape, tape, disc memory or other magnetic storage, or any other medium that can be used to store desired information and that can be accessed by a computer.

By means of the a SIP network element multi-address learning apparatus and the signaling monitoring system provided by the embodiment of the disclosure, learning on IP address of the SIP network element logical entity is enabled by using the Branch parameter of the first Via header of the SIP message, or learning on IP address of the SIP network element logical entity is enabled by using the relationship between the HOST string in the Top Route of the SIP request message and the destination IP address, such that it is possible to automatically and quickly identify which IP addresses in a communication network collectively belong to a SIP network element entity, allocate a unique network element identifier to the SIP network element entity, and establish an IP address-network element identifier information table and a network element identifier-IP address information table according to the IP addresses related to the SIP network element entity. Therefore, a SIP message can be identified according to the IP address-network element identifier information table or the network element identifier-IP address information table. In this way, even though the SIP network element uses different IP addresses in different flows of a session, the SIP signaling monitoring system can still quickly identify to which one of the segments a subsequent SIP message belongs. Moreover, the problems of high communicate and maintenance costs and information lag resulted from acquiring network element multi-address information directly from a network operator are solved, the workload of manual configuration and the complexity of personnel coordination are reduced, and the flexibility of the SIP signaling monitoring system for adapting to an external networking change is improved.

Hence, it should be understood by those of skills in the art that all or some of the steps in the method disclosed above, a system, and a function module/unit in an apparatus can be embodied as software (which can be realized by computer program codes executable by a computing device), firmware, hardware and a suitable combination thereof. In the hardware implementation, the division of the function modules/units mentioned in the above description does not necessarily correspond to the division of physical assemblies. For example, one physical assembly can have a plurality of functions, or one function or step can be executed by several physical assemblies in cooperation. Some assemblies or all the assemblies can be embodied as software that is executed by a processor, such as a central processing unit, a digital signal processor or a microprocessor, or be embodied as hardware, or be embodied as an integrated circuit, such as an application specific integrated circuit.

In addition, it is well known to those of ordinary skill in the art that a communication medium generally contains computer-readable instructions, data structures, computer program modules and other data in a modulated data signal obtained from, e.g., a carrier or other transmission mechanisms, and can include any information transfer medium. Therefore, the disclosure is not limited to any specific combination of hardware and software.

The above content are further descriptions made for the embodiments of the disclosure in conjunction with particular embodiments, and it should not be interpreted that the particular embodiments of the disclosure are only limited to these descriptions. For those of ordinary skills in the technical field to which the disclosure belongs, without departing from the concept of the disclosure, several simple deductions or replacements can be made. The scope of protection of the invention is defined by the appended claims.

## Claims

1. A SIP network element multi-address learning method, comprising:
allocating a network element identifier to a SIP network element logical entity in a communication network, the SIP network element logical entity including at least one IP address (S401);
performing learning on IP address of the SIP network element logical entity by using a Branch parameter of a first Via header of a SIP message, or performing learning on IP address of the SIP network element logical entity by using a relationship between a HOST string in Top Route of a SIP request message and a destination IP address (S402);
creating an IP address-network element identifier information table and a network element identifier-IP address information table according to an IP address/IP addresses related to the network element logical entity (S403); and
identifying, according to the IP address-network element identifier information table or the network element identifier-IP address information table, a network element logical entity to which a SIP message belongs (S404).

2. The SIP network element multi-address learning method according to claim 1, **characterized in that**, the IP address-network element identifier information table is an information table that takes an IP address as a Key value and includes in a Value part at least a network element identifier field and a network element role field; and the network element identifier-IP address information table is an information table that takes a network element identifier as a Key value and includes in a Value part at least a network element role field and at least one IP address field.

3. The SIP network element multi-address learning method according to claim 1, **characterized in that**, for a SIP request message and a SIP response message that have an identical CALL-ID header and an identical Method of CSeq header, when the SIP request message and the SIP response message fail to be associated with each other by using IP addresses, learning on the IP address of the SIP network element logical entity is performed by using the Branch parameter of the first Via header of a SIP message.

4. The SIP network element multi-address learning method according to claim 3, **characterized in that**, learning on IP address of the SIP network element logical entity by using the Branch parameters of the first Via header of a SIP message comprises:
inquiring about, when an initial SIP request message is received, a session data region taking a CALL-ID as a Key, creating a segment data region taking a source IP address plus a destination IP address as an identification feature, and saving a Branch parameter of a first Via header of the initial SIP request message (S601);
inquiring, when a SIP response message corresponding to the initial SIP request message is received, the session data region by using the CALL-ID as a Key, and if the inquiring fails, then quitting the learning on IP address;
comparing the source IP address plus the destination IP address, a source network element identifier or a destination network element identifier to identification features of all segment data regions in the session data region having the CALL-ID, positioning a segment data region then; and if the positioning succeeds, quitting the learning on IP address (S603);
matching, when the positioning of the segment data region fails, a Branch parameter of the first Via header of the SIP response message with a Branch parameters of the first Via header of the initial SIP request message; and if the matching fails, quitting the learning on IP address (S604); and
when the Branch parameters are successfully matched with each other, IP addresses that are learned collectively belonging to the network element logical entity (S605).

5. The SIP network element multi-address learning method according to claim 4, **characterized in that**, inquiring about, when an initial SIP request message is received, a session data region taking a CALL-ID as a Key comprises:
creating, when an inquiry about the session data region having the CALL-ID fails, a session data region taking the CALL-ID as a Key.

6. The SIP network element multi-address learning method according to claim 1, **characterized in that**, before performing learning on IP address of the SIP network element logical entity by using a relationship between a HOST string in Top Route of a SIP request message and a destination IP address, the method further comprises:
creating a HOST-IP address information table, wherein the HOST-IP address information table is an information table that takes a HOST as a Key value and includes in a Value part at least a type marker field and at least one ID address field; and the HOST is a domain name or a host name.

7. The SIP network element multi-address learning method of claim 6, **characterized in that**, when a preset condition is set, the learning on IP address of the SIP network element logical entity is performed by using the relationship between the HOST string in the Top Route of the SIP request message and the destination IP address, wherein the preset condition comprises: a predetermined time period, a compulsory learning stage in an initial stage of mounting or starting of a device, and triggering via an instruction by a user.

8. The SIP network element multi-address learning method according to claim 7, **characterized in that**, performing learning on IP address of the SIP network element logical entity by using a relationship between a HOST string in Top Route of a SIP request message and a destination IP address comprises:
checking, when a SIP request message that carries a Route header is received, whether a HOST part in the Top Route is in a form of IP address; and if the HOST part in the Top Route is in the form of IP address, quitting the learning on IP address; if the HOST part in the Top Route is not in the form of IP address, performing learning on HOST-IP address relationship by taking an entire HOST part of the Top Route as a Key and temporarily taking *host name* as a type marker (S901);
removing a part ahead of a first point character in the HOST string at a time and over and over again, and keeping a remaining part of the string at each time being recorded in the HOST-IP address information table as a Key, with taking *domain name* as the type marker, until learning has been completed for segments of all domain names (S902);
modifying, when it is learned that the HOST that is marked as *host name* has an actual type marker *domain name* in fact, the type marker of the HOST to *domain name(S903);* and
outputting, after learning is performed for a preset time period, all IP addresses in the HOST-IP address information table, which have the type marker *host name* and include different IP addresses with the number of greater than 1, as successfully learned IP addresses that belong to one and the same network element logical entity (S904).

9. The SIP network element multi-address learning method according to claim 8, further comprising: performing exclusion on the successfully learned IP addresses according to a preset special exclusion rule, wherein the special exclusion rule comprises: excluding an IP address containing a string *mgcf* in its host name part, and excluding an IP address containing a resource pool feature string *pool* in its host name part.

10. The SIP network element multi-address learning method according to claim 8, **characterized in that**, performing learning on HOST-IP address relationship by taking an entire HOST part of the Top Route as a Key comprises: converting the entire HOST part of the Top Route into uppercase or lowercase characters and then taking them as the Key for inquiring about a HOST-IP address information table; and if the inquiring fails, creating a new HOST-IP address information table.

11. A SIP network element multi-address learning apparatus, comprising: a configuration unit, an IP address learning unit, a creation unit and a message identification unit,
the configuration unit is configured to allocate a network element identifier to a SIP network element logical entity in a communication network, the SIP network element logical entity including at least one IP address;
the IP address learning unit is configured to perform learning on IP address of the SIP network element logical entity by using of a Branch parameter of a first Via header of a SIP message, or perform learning on IP address of the SIP network element logical entity by using a relationship between a HOST string in Top Route of a SIP request message and a destination IP address;
the creation unit is configured to create an IP address-network element identifier information table and a network element identifier-IP address information table according to an IP address/IP addresses corresponding to the network element logical entity; and
the message identification unit is configured to identify a SIP message according to the IP address-network element identifier information table or the network element identifier-IP address information table.

12. The SIP network element multi-address learning apparatus according to claim 11, **characterized in that**, the IP address learning unit comprises a determination unit and a processing unit;
the determination unit is configured to determine, when a SIP request message and a SIP response message fail to associate with each other by using IP addresses, whether CALL-ID headers of the SIP request message and the SIP response message are identical and whether Method of CSeq headers of the two are identical; and
the processing unit is configured to perform learning on IP address of the SIP network element logical entity by using the Branch parameter of the first Via header of the SIP message.

13. A SIP signaling monitoring system, comprising the SIP network element multi-address learning apparatus according to claim 11 or 12, and further comprising a processor, a memory and a communication bus;
the communication bus is configured to enable connection communication between the processor and the memory, and
the processor is configured to execute one or more computer programs that is/are stored in the memory so as to implement steps of the SIP network element multi-address learning method according to any one of claims 1 to 10.

14. A computer-readable storage medium, **characterized in that**, the computer-readable storage medium stores one or more computer programs, and the one or more computer programs is/are executable by one or more processors to implement steps of the SIP network element multi-address learning method according to any one of claims 1 to 10.

## Patentansprüche

1. Verfahren zum Mehrfachadresslernen eines SIP-Netzwerkelements, umfassend:
Zuweisen einer Netzwerkelementkennung an eine SIP-Netzwerkelementlogikentität in einem Kommunikationsnetz, wobei die SIP-Netzwerkelementlogikentität mindestens eine IP-Adresse umfasst (S401);
Durchführen des Lernens der IP-Adresse der SIP-Netzwerkelementlogikentität unter Verwendung eines Branch-Parameters eines ersten Via-Headers einer SIP-Nachricht, oder Durchführen des Lernens der IP-Adresse der SIP-Netzwerkelementlogikentität unter Verwendung einer Beziehung zwischen einer HOST-Sting im Top Route einer SIP-Anfragenachricht und einer Ziel-IP-Adresse (S402);
Erzeugen einer IP-Adress-Netzwerkelementkennung-Informationstabelle und einer Netzwerkelementkennung-IP-Adress-Informationstabelle gemäß einer IP-Adresse/IP-Adressen, die sich auf die Netzwerkelementlogikentität beziehen (S403); und
Identifizieren einer Netzwerkelementlogikentität, zu der eine SIP-Nachricht gehört, gemäß der IP-Adress-Netzwerkelementkennung-Informationstabelle oder der Netzwerkelementkennung-IP-Adress-Informationstabelle (S404).

2. Verfahren zum Mehrfachadresslernen eines SIP-Netzwerkelements nach Anspruch 1, **dadurch gekennzeichnet, dass** die IP-Adress-Netzwerkelementkennung-Informationstabelle eine Informationstabelle ist, die eine IP-Adresse als einen Key-Wert nimmt und in einem Wertteil mindestens ein Netzwerkelementkennungsfeld und ein Netzwerkelementrollenfeld umfasst; und die Netzwerkelementkennung-IP-Adress-Informationstabelle eine Informationstabelle ist, die eine Netzwerkelementkennung als einen Key-Wert nimmt und in einem Wertteil mindestens ein Netzwerkelementrollenfeld und mindestens ein IP-Adressfeld umfasst.

3. Verfahren zum Mehrfachadresslernen eines SIP-Netzwerkelements nach Anspruch 1, **dadurch gekennzeichnet, dass** für eine SIP-Anfragenachricht und eine SIP-Antwortnachricht, die einen identischen CALL-ID-Header und einen identischen Method des CSeq-Headers aufweisen, wenn die SIP-Anfragenachricht und die SIP-Antwortnachricht nicht miteinander unter Verwendung von IP-Adressen verknüpft werden können, das Lernen der IP-Adresse der SIP-Netzwerkelementlogikentität unter Verwendung des Branch-Parameters des ersten Via-Headers einer SIP-Nachricht durchgeführt wird.

4. Verfahren zum Mehrfachadresslernen eines SIP-Netzwerkelements nach Anspruch 3, **dadurch gekennzeichnet, dass** das Lernen der IP-Adresse der SIP-Netzwerkelementlogikentität unter Verwendung des Branch-Parameters des ersten Via-Headers einer SIP-Nachricht umfasst:
Abfragen, wenn eine initiale SIP-Anfragenachricht empfangen wird, eines Sitzungsdatenbereichs, der eine CALL-ID als einen Key nimmt, Erzeugen eines Segmentdatenbereichs, der eine Quell-IP-Adresse plus eine Ziel-IP-Adresse als ein Identifikationsmerkmal nimmt, und Speichern eines Branch-Parameters eines ersten Via-Headers der initialen SIP-Anfragenachricht (S601);
Abfragen, wenn eine SIP-Antwortnachricht, die der initialen SIP-Anfragenachricht entspricht, empfangen wird, des Sitzungsdatenbereichs unter Verwendung der CALL-ID als einen Key, und wenn die Abfrage fehlschlägt, dann Beenden des Lernens der IP-Adresse;
Vergleichen der Quell-IP-Adresse plus der Ziel-IP-Adresse, einer Quell-Netzwerkelementkennung oder einer Ziel-Netzwerkelementkennung mit Identifikationsmerkmalen aller Segmentdatenbereiche im Sitzungsdatenbereich, der die CALL-ID hat, dann Positionieren eines Segmentdatenbereichs; und wenn das Positionieren erfolgreich ist, dann Beenden des Lernens der IP-Adresse (S603);
Abgleichen, wenn das Positionieren des Segmentdatenbereichs fehlschlägt, eines Branch-Parameters des ersten Via-Headers der SIP-Antwortnachricht mit einem Branch-Parameter des ersten Via-Headers der initialen SIP-Anfragenachricht; und wenn das Abgleichen fehlschlägt, Beenden des Lernens der IP-Adresse (S604); und
wenn die Branch-Parameter erfolgreich miteinander abgeglichen werden, IP-Adressen, die gelernt werden, gemeinsam zu der Netzwerkelementlogikentität gehören (S605).

5. Verfahren zum Mehrfachadresslernen eines SIP-Netzwerkelements nach Anspruch 4, **dadurch gekennzeichnet, dass** Abfragen, wenn eine initiale SIP-Anfragenachricht empfangen wird, eines Sitzungsdatenbereichs, der eine CALL-ID als einen Key nimmt, umfasst:
Erzeugen, wenn eine Abfrage des Sitzungsdatenbereichs, der die CALL-ID hat, fehlschlägt, eines Sitzungsdatenbereichs, der die CALL-ID als einen Key nimmt.

6. Verfahren zum Mehrfachadresslernen eines SIP-Netzwerkelements nach Anspruch 1, **dadurch gekennzeichnet, dass** vor dem Durchführen des Lernens der IP-Adresse der SIP-Netzwerkelementlogikentität unter Verwendung einer Beziehung zwischen einer HOST-Sting im Top Route einer SIP-Anfragenachricht und einer Ziel-IP-Adresse, das Verfahren ferner umfasst:
Erzeugen einer HOST-IP-Adress-Informationstabelle, wobei die HOST-IP-Adress-Informationstabelle eine Informationstabelle ist, die einen HOST als einen Key-Wert nimmt und in einem Wertteil mindestens ein Typmarkierungsfeld und mindestens ein ID-Adressfeld umfasst; und wobei der HOST ein Domainname oder ein Hostname ist.

7. Verfahren zum Mehrfachadresslernen eines SIP-Netzwerkelements nach Anspruch 6, **dadurch gekennzeichnet, dass**, wenn eine voreingestellte Bedingung gesetzt ist, das Lernen der IP-Adresse der SIP-Netzwerkelementlogikentität unter Verwendung der Beziehung zwischen dem HOST-String im Top Route der SIP-Anfragenachricht und der Ziel-IP-Adresse durchgeführt wird, wobei die voreingestellte Bedingung umfasst: einen vorgegebenen Zeitraum, eine obligatorische Lernphase in einer Anfangsphase der Montage oder des Starts eines Geräts und das Auslösen durch eine Anweisung eines Benutzers.

8. Verfahren zum Mehrfachadresslernen eines SIP-Netzwerkelements nach Anspruch 7, **dadurch gekennzeichnet, dass** das Durchführen des Lernens der IP-Adresse der SIP-Netzwerkelementlogikentität unter Verwendung einer Beziehung zwischen einer HOST-Sting im Top Route einer SIP-Anfragenachricht und einer Ziel-IP-Adresse umfasst:
Überprüfen, wenn eine SIP-Anfragenachricht empfangen wird, die einen Route-Header trägt, ob ein HOST-Teil im Top Route in Form einer IP-Adresse vorliegt; und wenn der HOST-Teil im Top Route in Form einer IP-Adresse vorliegt, Beenden des Lernens der IP-Adresse; wenn der HOST-Teil im Top Route nicht in der Form von IP-Adresse ist, Durchführen des Lernens der HOST-IP-Adresse-Beziehung durch Nehmen eines gesamten HOST-Teils des Top Route als einen Key und durch vorübergehendem Nehmen von *Domain-Name* als eine Typmarkierung (S901);
Entfernen eines Teils vor einem ersten Punktzeichen im HOST-String einmal und immer wieder, und Behalten eines verbleibenden Teils des Strings bei jedem Mal, der in der HOST-IP-Adresse-Informationstabelle als ein Key aufgezeichnet wird, unter Nehmen von *Domain-Name* als die Typmarkierung, bis das Lernen für Segmente aller *Domain-Name* abgeschlossen wurde (S902);
Modifizieren, wenn gelernt wird, dass der als *Host-Name* markierte HOST tatsächlich einen Typmarkierung *Domain-Name* besitzt, der Typmarkierung des HOST auf *Domain-Name* ändern (S903); und
Ausgeben, nachdem das Lernen für einen voreingestellten Zeitraum durchgeführt wurde, aller IP-Adressen in der HOST-IP-Adresse-Informationstabelle, die die Typmarkierung *host name* aufweisen und unterschiedliche IP-Adressen mit einer Anzahl von größer als 1 enthalten, als erfolgreich gelernte IP-Adressen, die zu ein und derselben Netzwerkelementlogikentität gehören (S904.

9. Verfahren zum Mehrfachadresslernen eines SIP-Netzwerkelements nach Anspruch 8, weiterhin umfassend: Durchführen eines Ausschließens der erfolgreich gelernten IP-Adressen gemäß einer voreingestellten speziellen Ausschlussregel, wobei die spezielle Ausschlussregel umfasst: Ausschließen einer IP-Adresse, die einen String *mgcf* in ihrem Hostnamen-Teil enthält, und Ausschließen einer IP-Adresse, die einen Ressourcenpool-Merkmalstring *pool* in ihrem Hostnamen-Teil enthält.

10. Verfahren zum Mehrfachadresslernen eines SIP-Netzwerkelements nach Anspruch 8, **dadurch gekennzeichnet, dass** das Durchführen des Lernens der HOST-IP-Adresse-Beziehung durch Nehmen eines gesamten HOST-Teils des Top Route als einen Key umfasst: Umwandeln des gesamten HOST-Teils des Top Route in Großbuchstaben oder Kleinbuchstaben und dann Nehmen von ihnen als den Key für das Abfragen einer HOST-IP-Adresse-Informationstabelle; und wenn die Abfrage fehlschlägt, Erzeugen einer neuen HOST-IP-Adresse-Informationstabelle.

11. Vorrichtung zum Mehrfachadresslernen eines SIP-Netzwerkelements, umfassend: eine Konfigurationseinheit, eine IP-Adress-Lerneinheit, eine Erzeugungseinheit und eine Nachrichtenidentifikationseinheit,
wobei die Konfigurationseinheit konfiguriert ist, um eine Netzwerkelementkennung an eine SIP-Netzwerkelementlogikentität in einem Kommunikationsnetz zuzuweisen, wobei die SIP-Netzwerkelementlogikentität mindestens eine IP-Adresse umfasst;
wobei die IP-Adressen-Lerneinheit konfiguriert ist, um ein Lernen der IP-Adresse der SIP-Netzwerkelementlogikentität unter Verwendung eines Branch-Parameters eines ersten Via-Headers einer SIP-Nachricht durchzuführen, oder um ein Lernen der IP-Adresse der SIP-Netzwerkelementlogikentität unter Verwendung einer Beziehung zwischen einer HOST-Zeichenkette im Top Route eines SIP-Anfragenachricht und einer Ziel-IP-Adresse durchzuführen;
wobei die Erzeugungseinheit konfiguriert ist, um eine IP-Adress-Netzwerkelementkennung-Informationstabelle und eine Netzwerkelementkennung-IP-Adress-Informationstabelle gemäß einer IP-Adresse/IP-Adressen, die der Netzwerkelementlogikentität entsprechen, zu erzeugen; und
wobei die Nachrichtenidentifikationseinheit konfiguriert ist, um eine SIP-Nachricht gemäß der IP-Adresse-Netzwerkelementkennung-Informationstabelle oder der Netzwerkelementkennung-IP-Adresse-Informationstabelle zu identifizieren.

12. Vorrichtung zum Mehrfachadresslernen eines SIP-Netzwerkelements nach Anspruch 1, **dadurch gekennzeichnet, dass** die IP-Adressen-Lerneinheit eine Bestimmungseinheit und eine Verarbeitungseinheit umfasst;
wobei die Bestimmungseinheit konfiguriert ist, um zu bestimmen, wenn eine SIP-Anfragenachricht und eine SIP-Antwortnachricht unter Verwendung von IP-Adressen miteinander nicht assoziiert werden können, ob CALL-ID-Header der SIP-Anfragenachricht und der SIP-Antwortnachricht identisch sind und ob Method des CSeq-Headers der beiden identisch sind; und
wobei die Verarbeitungseinheit konfiguriert ist, um das Lernen der IP-Adresse der SIP-Netzwerkelementlogikentität unter Verwendung des Branch-Parameters des ersten Via-Headers einer SIP-Nachricht durchzuführen.

13. SIP-Signalisierungsüberwachungssystem, umfassend die Vorrichtung zum Mehrfachadresslernen eines SIP-Netzwerkelements nach Anspruch 11 oder 12, und ferner umfassend einen Prozessor, einen Speicher und einen Kommunikationsbus;
wobei der Kommunikationsbus konfiguriert ist, um eine Verbindungskommunikation zwischen dem Prozessor und dem Speicher zu ermöglichen, und
der Prozessor konfiguriert ist, um ein oder mehrere Computerprogramme auszuführen, die in dem Speicher gespeichert sind, um so Schritte des Verfahrens zum Mehrfachadresslernen eines SIP-Netzwerkelements nach einem der Ansprüche 1 bis 10 zu implementieren.

14. Computerlesbares Speichermedium, **dadurch gekennzeichnet, dass** das computerlesbare Speichermedium ein oder mehrere Computerprogramme speichert, und das eine oder die mehreren Computerprogramme von einem oder mehreren Prozessoren ausführbar sind, um Schritte des Verfahrens zum Mehrfachadresslernen eines SIP-Netzwerkelements nach einem der Ansprüche 1 bis 10 zu implementieren.

## Revendications

1. Procédé d'apprentissage de multi-adresse pour un élément de réseau SIP, comprenant :
attribuer un identifiant d'élément de réseau à une entité logique d'élément de réseau SIP dans un réseau de communication, l'entité logique d'élément de réseau SIP comprenant au moins une adresse IP (S401) ;
effectuer un apprentissage sur une adresse IP de l'entité logique d'élément de réseau SIP en utilisant un paramètre Branche d'un premier en-tête Via d'un message SIP, ou effectuer un apprentissage sur une adresse IP de l'entité logique d'élément de réseau SIP en utilisant une relation entre une chaîne HOST dans une Top Route d'un message de demande SIP et une adresse IP de destination (S402) ;
créer un tableau d'informations d'adresse IP-identifiant d'élément de réseau et un tableau d'informations d'identifiant d'élément de réseau-adresse IP en fonction d'une adresse IP/des adresses IP liées à l'entité logique d'élément de réseau (S403) ; et
identifier, en fonction du tableau d'informations d'adresse IP-identifiant d'élément de réseau ou du tableau d'informations d'identifiant d'élément de réseau-adresse IP, une entité logique d'élément réseau à laquelle appartient un message SIP (S404).

2. Procédé d'apprentissage de multi-adresse pour un élément de réseau SIP selon la revendication 1, **caractérisé en ce que**, le tableau d'informations d'adresse IP-identifiant d'élément de réseau est un tableau d'informations qui prend une adresse IP comme valeur Clé et comprend dans une partie Valeur au moins un champ d'identifiant d'élément de réseau et un champ de rôle d'élément de réseau ; et le tableau d'informations d'identifiant d'élément de réseau-adresse IP est un tableau d'informations qui prend un identifiant d'élément de réseau comme valeur Clé et comprend dans une partie Valeur au moins un champ de rôle d'élément de réseau et au moins un champ d'adresse IP.

3. Procédé d'apprentissage de multi-adresse pour un élément de réseau SIP selon la revendication 1, **caractérisé en ce que**, pour un message de demande SIP et un message de réponse SIP ayant un en-tête CALL-ID identique et un Method identique d'en-tête CSeq, lorsque le message de demande SIP et le message de réponse SIP échouent à être associés l'un à l'autre en utilisant des adresses IP, l'apprentissage sur l'adresse IP de l'entité logique de réseau SIP est effectué en utilisant le paramètre Branch du premier en-tête Via d'un message SIP.

4. Procédé d'apprentissage de multi-adresse pour un élément de réseau SIP selon la revendication 3, **caractérisé en ce que**, l'apprentissage sur une adresse IP de l'entité logique d'élément de réseau SIP en utilisant le paramètre Branche du premier en-tête Via d'un message SIP comprend :
s'enquérir de, lorsqu'un message de demande SIP initial est reçu, une région de données de session prenant un CALL-ID comme Clé, créer une région de données de segment prenant une adresse IP source plus une adresse IP de destination comme caractéristique d'identification, et sauvegarder un paramètre Branch d'un premier en-tête Via du message de demande SIP initial (S601) ;
s'enquérir de, lorsqu'un message de réponse SIP correspondant au message de demande SIP initial est reçu, la région de données de session en utilisant le CALL-ID comme Clé, et si l'enquête échoue, alors quitter l'apprentissage sur adresse IP ;
comparer l'adresse IP source plus l'adresse IP de destination, un identifiant d'élément de réseau source ou un identifiant d'élément de réseau de destination avec des caractéristiques d'identification de toutes les régions de données de segment dans la région de données de session ayant le CALL-ID, puis positionner une région de données de segment ; et si le positionnement réussit, quitter l'apprentissage sur adresse IP (S603) ;
faire correspondre, lorsque le positionnement de la région de données de segment échoue, un paramètre Branch du premier en-tête Via du message de réponse SIP à un paramètre Branch du premier en-tête Via du message de demande SIP initial ; et si la correspondance échoue, quitter l'apprentissage sur adresse IP (S604) ; et
lorsque les paramètres Branch sont correspondus l'un à l'autre avec succès, des adresses IP qui sont apprises collectivement appartiennent à l'entité logique d'élément de réseau (S605).

5. Procédé d'apprentissage de multi-adresse pour un élément de réseau SIP selon la revendication 4, **caractérisé en ce que**, s'enquérant de, lorsqu'un message de demande SIP initial est reçu, une région de données de session prenant un CALL-ID comme Clé comprend :
créer, lorsqu'une enquête concernant la région de données de session ayant le CALL-ID échoue, une région de données de session prenant le CALL-ID comme Clé.

6. Procédé d'apprentissage de multi-adresse pour un élément de réseau SIP selon la revendication 1, **caractérisé en ce que**, avant d'effectuer un apprentissage sur une adresse IP de l'entité logique d'élément de réseau SIP en utilisant une relation entre une chaîne HOST dans une Top Route d'un message de demande SIP et une adresse IP de destination, le procédé comprend en outre :
créer un tableau d'informations d'HOST-adresse IP, le tableau d'informations d'HOST-adresse IP étant un tableau d'informations qui prend un HOST comme valeur Clé et comprend dans une partie Valeur au moins un champ marqueur de type et au moins un champ d'adresse ID ; et l'HOST étant un nom de domaine ou un nom d'hôte.

7. Procédé d'apprentissage de multi-adresse pour un élément de réseau SIP selon la revendication 6, **caractérisé en ce que**, lorsqu'une condition prédéfinie est définie, l'apprentissage sur une adresse IP de l'entité logique d'élément de réseau SIP est effectué en utilisant la relation entre la chaîne HOST dans une Top Route du message de demande SIP et l'adresse IP de destination, dans lequel la condition prédéfinie comprend : une période de temps prédéterminée, un stade d'apprentissage obligatoire à un stade initial de montage ou de démarrage d'un équipement, et un déclenchement par une instruction d'un utilisateur.

8. Procédé d'apprentissage de multi-adresse pour un élément de réseau SIP selon la revendication 7, **caractérisé en ce que**, effectuant un apprentissage sur une adresse IP de l'entité logique d'élément de réseau SIP en utilisant une relation entre une chaîne HOST dans une Top Route d'un message de demande SIP et une adresse IP de destination comprend :
vérifier, lorsqu'un message de demande SIP portant un en-tête Route est reçu, si une partie HOST dans la Top Route est sous une forme d'adresse IP ; et si la partie HOST dans la Top Route est sous la forme d'adresse IP, quitter l'apprentissage sur adresse IP ; si la partie HOST dans la Top Route n'est pas sous la forme d'adresse IP, effectuer un apprentissage sur une relation HOST-adresse IP en prenant un ensemble de la partie HOST de la Top Route comme Clé et en prenant temporairement *nom d'hôte* comme marqueur de type (S901) ;
éliminer une partie avant d'un premier caractère de point dans la chaîne HOST à la fois et répéter, et garder une partie restante de la chaîne à chaque fois notée dans le tableau d'informations HOST-adresse IP comme Clé, en prenant *nom de domaine* comme marqueur de type, jusqu'à ce que l'apprentissage ait été complété pour des segments de tous les noms de domaine (S902) ;
modifier, lorsqu'il est appris que l'HOST marqué comme *nom d'hôte* a en fait un marqueur de type réel *nom de domaine,* le marqueur de type de l'HOST en *nom de domaine(S903)* ; et
produire, après que l'apprentissage a été effectué pendant une période de temps prédéfinie, toutes les adresses IP dans le tableau d'informations HOST-adresse IP, qui ont le marqueur de type *nom d'hôte* et comprennent différentes adresses IP avec un nombre supérieur à 1, comme adresses IP apprises avec succès qui appartiennent à une et même entité logique d'élément réseau (S904).

9. Procédé d'apprentissage de multi-adresse pour un élément de réseau SIP selon la revendication 8, comprenant en outre : effectuer une exclusion sur les adresses IP apprises avec succès selon une règle d'exclusion spéciale prédéfinie, la règle d'exclusion spéciale comprenant : exclure une adresse IP contenant une chaîne *mgcf* dans sa partie de nom d'hôte, et exclure une adresse IP contenant une chaîne de caractéristiques de pool de ressources *pool* dans sa partie de nom d'hôte.

10. Procédé d'apprentissage de multi-adresse pour un élément de réseau SIP selon la revendication 8, **caractérisé en ce que**, effectuant un apprentissage sur une relation HOST-adresse IP en prenant un ensemble de la partie HOST de la Top Route comme Clé comprend : convertir l'ensemble de la partie HOST de la Top Route en caractères majuscules ou minuscules, puis les prendre comme Clé pour s'enquérir d'un tableau d'informations d'HOST-adresse IP ; et si l'enquête échoue, créer un nouvel tableau d'informations d'HOST-adresse IP.

11. Appareil d'apprentissage de multi-adresse pour un élément de réseau SIP, comprenant : une unité de configuration, une unité d'apprentissage d'adresse IP, une unité de création et une unité d'identification de message,
l'unité de configuration est configurée pour attribuer un identifiant d'élément de réseau à une entité logique d'élément de réseau SIP dans un réseau de communication, l'entité logique d'élément de réseau SIP comprenant au moins une adresse IP ;
l'unité d'apprentissage d'adresse IP est configurée pour effectuer un apprentissage sur une adresse IP de l'entité logique d'élément de réseau SIP en utilisant un paramètre Branche d'un premier en-tête Via d'un message SIP, ou effectuer un apprentissage sur une adresse IP de l'entité logique d'élément de réseau SIP en utilisant une relation entre une chaîne HOST dans une Top Route d'un message de demande SIP et une adresse IP de destination ;
l'unité de création est configurée pour créer un tableau d'informations d'adresse IP-identifiant d'élément de réseau et un tableau d'informations d'identifiant d'élément de réseau-adresse IP en fonction d'une adresse IP/des adresses IP liées à l'entité logique d'élément de réseau ; et
l'unité d'identification de message est configurée pour identifier un message SIP en fonction du tableau d'informations d'adresse IP-identifiant d'élément de réseau ou du tableau d'informations d'identifiant d'élément de réseau-adresse IP.

12. Appareil d'apprentissage de multi-adresse pour un élément de réseau SIP selon la revendication 11, **caractérisé en ce que**, l'unité d'apprentissage d'adresse IP comprend une unité de détermination et une unité de traitement ;
l'unité de détermination est configurée pour déterminer, lorsqu'un message de demande SIP et un message de réponse SIP échouent à être associés l'un à l'autre en utilisant des adresses IP, si des en-têtes CALL-ID du message de demande SIP et du message de réponse SIP sont identiques et si Method d'en-têtes CSeq des deux sont identiques ; et
l'unité de traitement est configurée pour effectuer un apprentissage sur une adresse IP de l'entité logique d'élément de réseau SIP en utilisant le paramètre Branche du premier en-tête Via du message SIP.

13. Système de surveillance de signalisation SIP, comprenant l'appareil d'apprentissage de multi-adresse pour un élément de réseau SIP selon la revendication 11 ou 12, et comprenant en outre un processeur, une mémoire et un bus de communication ;
le bus de communication est configuré pour permettre une communication de connexion entre le processeur et la mémoire ; et
le processeur est configuré pour exécuter un ou plusieurs programmes informatiques stockés dans la mémoire afin de mettre en œuvre des étapes du procédé d'apprentissage de multi-adresse pour un élément de réseau SIP selon l'une quelconque des revendications 1 à 10.

14. Support de stockage lisible par ordinateur, **caractérisé en ce que**, le support de stockage lisible par ordinateur stocke un ou plusieurs programmes informatiques, et l'un ou plusieurs programmes informatiques est/sont exécuté(s) par un ou plusieurs processeurs afin de mettre en œuvre en œuvre des étapes du procédé d'apprentissage de multi-adresse pour un élément de réseau SIP selon l'une quelconque des revendications 1 à 10.
